# EUROPEAN PATENT SPECIFICATION

(11) **EP 2 383 426 B1**
(45) Date of publication and mention of the grant of the patent: **23.05.2018**
(21) Application number: 11155666.8
(22) Date of filing: 23.02.2011
(51) Int. Cl.: E21B 33/035, F16B 13/02

(54) **Well production shut down**
Bohrlochproduktionsabschaltung
Arrêt de production de puits

(30) Priority: 29.04.2010 GB 201007150
(43) Date of publication of application: 02.11.2011
(73) Proprietor: GE Oil & Gas UK Limited, Nailsea Bristol BS48 1BS (GB)
(72) Inventor: Kent, Ian J., Nailsea, Bristol BS48 2BH (GB); Holley, Stuart Guy, Bedminster, Bristol BS3 3BL (GB); HUutchings, Vernon Lester, Thornbury, Bristol BS35 1TT (GB)
(74) Representative: Lee, Brenda

(56) References cited:
- US-A1- 2002 011 580
- US-A1- 2006 064 256
- US-A1- 2009 044 938
- US-A1- 2009 079 583

## Description

### Field of the Invention

This invention relates to a method and system for controlling production shut down of an underwater fluid production well, for example a subsea hydrocarbon extraction well.

### Background of the Invention

A preferred current method available to a well operator for shutting down a single subsea well in a multiple well complex is via the surface platform. Data such as pressures and temperatures relating to the operation of the well are transmitted to the surface platform through the well communication system typically via an umbilical cable. Such data are typically monitored by the well operator. The need to shut down a well is usually automatically determined by an integrated control and safety system (ICSS) which is a safety integrity level (SIL) rated system located at the surface, though the operator may instigate this manually via the ICSS. Usually the ICSS is connected to vent valves on the subsea high pressure unit (HPU) which when opened cause the hydraulic supplies in the umbilical to depressurise, and as a result the well will eventually shut down, with the time taken to do so being dependent on the length of the umbilical. If it is determined that a well shut down is required in a controlled and timely manner, a command is transmitted through the same communication system to a subsea electronics module (SEM) of the subsea well tree, the command typically resulting in the closing of a production wing valve, followed by operation of the vent valves at the HPU to ensure that the system vents and shuts down. The command signal from the surface platform is received by a subsea electronics module (SEM) located in a subsea control module (SCM), which may be located at the well head. The SEM electronics drives a directional control valve (DCV) in the SCM, which in turn controls the hydraulic supply to operate the production wing valve.

As prior art, there may be mentioned US2002/011580 and US2006/064256, which each disclose methods for controlling production shut down of an underwater fluid production well having the precharacterising features of claim 1.

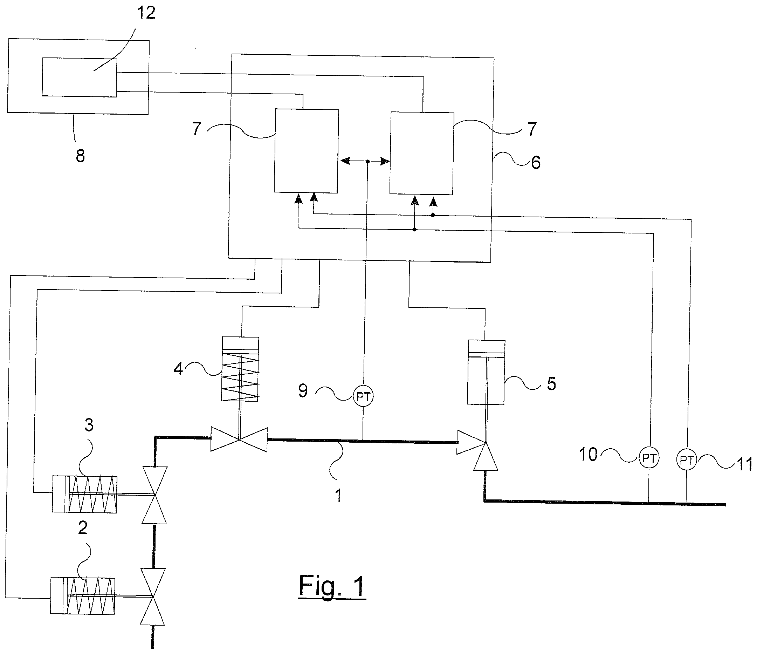

A known system is shown in Fig. 1. As shown, a production flowline 1 is fitted with a number of valves to control and protect the system, which include a surface-controlled subsurface safety valve (SCSSV) 2, a production master valve (PMV) 3, a production wing valve (PWV) 4 and a flow control choke 5. The valves 2, 3 and 4 are hydraulically operated and are self-returning, in that with a loss of hydraulic power the valves close automatically, for example under bias by return springs. Hydraulic power is fed to valves 2, 3 and 4 via directional control valves (DCVs, not shown) located within a subsea control module (SCM) 6, which is mounted on the well tree. Electrical operating solenoids of the DCVs are driven by the electronics of a subsea electronics module (SEM) 7 located within SCM 6. In Fig. 1, two SEMs 7 are shown, providing back-up safety in the event of failure of one SEM 7. The SEMs 7 are fed with control signals from a topside control system 8 located on a surface platform via an umbilical through a so-called 'black channel' (as described in GB-A-2452948 for example). Any requirement to shut down the well, such as in an emergency, is effected by control signals transmitted from the topside control platform 8 to an SEM 7 and associated DCVs, to actuate the appropriate valves to achieve a production shut down (PSD). The decision to shut down the well is made via an ICSS 12 as described above, typically from observations of temperatures and pressures which may for example be transmitted from sensors 9, 10 and 11 located on the well. In this case, in order to effect shut-down, a signal from at least one sensor 9, 10, 11 must be passed to the surface-located ICSS 12 via an SEM 7 and the umbilical, processed by the ICSS 12, and then a shut down control signal is sent by the ICSS 12, through the umbilical to the subsea well head, via an SEM 7 to cause at least one DCV to activate, which in turn causes closure of at least one valve, for example a vent valve or production wing valve.

A problem with such a system is that it is lengthy and complex, involving a large number of components, and communication is required from well head sensors to the surface and back again, and this leads to lower than desired reliability. Indeed, such known systems have such a poor 'probability of failure on demand' that they are unlikely to achieve even the lowest safety integrity level (SIL) rating, which is SIL 1.

It is an aim of the present invention to overcome this problem and improve the reliability of the shut down system. This aim is achieved by providing a shut down processing function at the well.

Such an implementation of a production shut down (PSD) system that locally, i.e. subsea, detects a fault condition using sensors and a local processor, employing SIL rateable software, may effect a PSD without the need to communicate with the surface. The system ideally permits a PSD by command from the surface if required but does not rely on this communication in the event of the need for a PSD in an emergency. Furthermore, a failure of the black channel communication or electric power from the surface, ideally results in a locally operated PSD.

In this way, the safety integrity of the well production shut down system is assured by the local process as it can be SIL rated, whilst still allowing a traditional PSD by command from the topside control system.

In accordance with a first aspect of the present invention there is provided a method for controlling production shut down of an underwater fluid production well, according to claim 1. In accordance with a second aspect of the present invention there is provided a system for controlling production shut down of an underwater fluid production well, according to claim 8. The processor could be adapted to receive a control signal received from a surface location and output a shut down signal in dependence on the control signal.

The processor could be SIL-rateable.

The processor could determine if a shut-down is required by comparing the sensor output with a predetermined limit and/or by comparing the sensor output with a modelled behaviour.

The well could comprise a plurality of sensors, the processor receiving and processing output signals from each of said plurality of sensors.

The processor could be located within a subsea electronics module at the well head. The valve could comprise a directional control valve.

### Brief Description of the Drawings

Fig. 1 schematically shows a known hydrocarbon extraction well control system;
Fig. 2 schematically shows an embodiment of a hydrocarbon extraction well control system in accordance with the present invention; and
Fig. 3 schematically shows an enlarged portion of the system of Fig. 2.

### Description of an Embodiment of the Invention

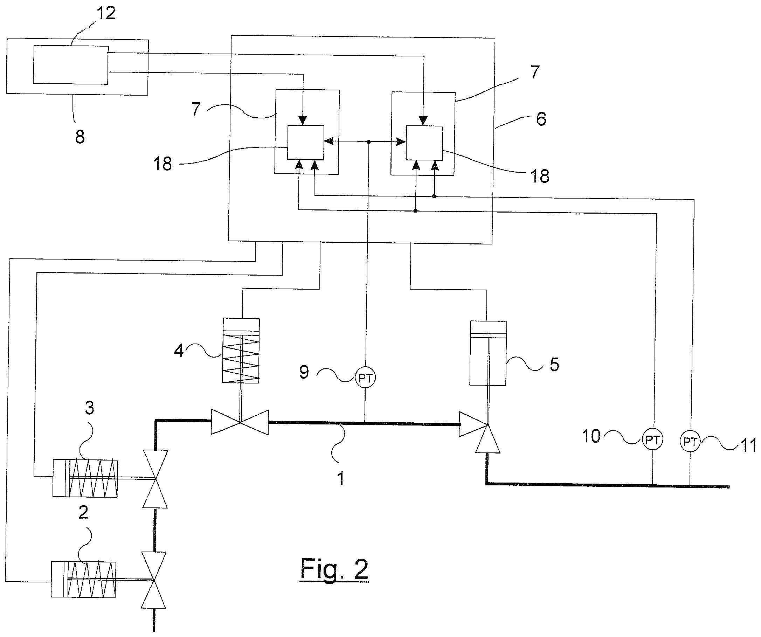

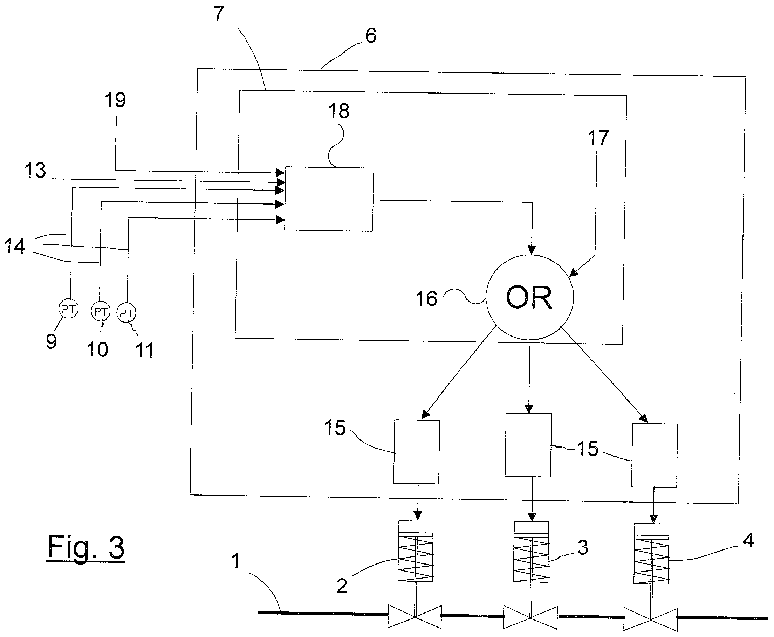

An embodiment of the invention is schematically shown in Figs. 2 and 3. As far as possible, the numbering used in Fig. 1 is retained for like components.

In this embodiment there are many components in common with the known system of Fig.1, which enables the inventive system to be retrofitted to an existing well system with a minimum of disruption. A local production shut down (PSD) processor 18 is fitted at a well head within each SEM 7. This processor 18 is relatively simple, with relatively low complexity, and is therefore SIL rateable. In this embodiment, one processor 18 is provided within each SEM 7. In alternative embodiments (not shown) additional processors 18 may be provided within each SEM 7 to provide back-up functionality.

Each processor 18 is adapted to receive output signals from pressure / temperature sensors 9, 10 and 11, and process these as set out below. Each processor 18 is operable to identify when a production shut down is required by appropriate processing of these input signals, and to effect this production shut down. To this end, each processor 18 is also operable to output shut down control signals to DCVs controlling appropriate valves 2, 3, 4 (described in more detail below with respect to Fig. 3). Each processor 18 is also adapted to receive control signals 19 from ICSS 12 located at the topside platform 8.

The logic of this local PSD process is illustrated in Fig. 3. Predetermined limits 13 for pressures and temperatures are fed to the PSD processor 18, for example during initialisation pre-deployment, or during ongoing service. These limit data are stored within processor 18 or within SEM 7. In addition, the processor 18 receives system measurements 14 from the local pressure / temperature sensors 9, 10 and 11. The processor 18 compares the system measurements 14 with the limits 13. In the event of a fault condition being detected, typically because at least one measurement 14 exceeds a limit 13, then the processor 18 outputs shut down operation control signals to appropriate DCVs 15, which act to control valves 2, 3 and 4. The shut down signal output from processor 18 is fed via an OR gate 16. Gate 16 also has a traditional 'black channel' input control 17 fed to it as a command input, arranged such that loss of the black channel input, for example due to a loss of electric power at the surface, automatically causes gate 16 to activate DCVs 15 to close the valves 2, 3 and 4, and thus achieve a production shut down.

As a further safety feature, each processor 18 is adapted to receive command signals 19 from the ICSS 12 located at the surface, and to effect a PSD upon receipt of an appropriate command control signal from the ICSS 12.

Each PSD processor 18 can be implemented in hardware. Alternatively, each processor 18 may comprise a software program, for example written in C, running in a relatively simple processor located within an SEM 7, which is therefore SIL rateable, to provide process flexibility. Each processor may for example be housed in an electronics board within its SEM 7.

The above-described embodiments are exemplary only, and other possibilities and alternatives within the scope of the invention will be apparent to those skilled in the art. For example, in the above embodiment, shut down may be effected from the surface either by sending an appropriate control signal 19 to the processor, or by the absence of a black channel input 17. However in an alternative embodiment, command signals from the ICSS 12 may bypass processor 18, and instead be passed directly to OR gate 16. Such an arrangement further increases the relative simplicity of the system. Alternatively, control signals 19 from ICSS 12 may be dispensed with entirely, such that topside control is effected solely through black channel input 17.

While three pressure / temperature sensors 9, 10 and 11 have been described, in fact the processor 18 may receive inputs from as many sensors as are provided at the well head.

While the embodiment described above compares the received sensor signals with preset limits 13, other methods for determining fault conditions may be used. Additionally or alternatively for example, the processing system may track the change in sensor output over time, and act to effect shut down in the event that the rate of change of the sensor output exceeds a certain level. Also additionally or alternatively, an 'intelligent' system could be used, in which outputs from various sensors can be monitored and compared to a model of expected behaviour.

## Claims

1. A method for controlling production shut down of an underwater fluid production well, comprising the steps of:
a) monitoring an output signal from a sensor (9 or 10 or 11) located at a well head of the underwater fluid production well;
b) processing the signal to determine if a shut-down is required; and
c) effecting shut down by sending a shut-down signal to a device to cause actuation of a valve (2 or 3 or 4) located at the well head, said actuation causing the well to shut down production;
wherein in step b), the processing is performed by a processor (18) located at the well head, **characterised in that** the method further comprises the step of receiving, at the well head, a control signal (19) from a surface location and logically combining this with the processor output, such that a shut down signal may be received at the valve (2 or 3 or 4) from either the processor or from the surface location.

2. A method according to claim 1, wherein the processor (18) is SIL-rateable.

3. A method according to any preceding claim, wherein the processor (18) determines if a shut-down is required by comparing the sensor (9 or 10 or 11) output with a predetermined limit (13).

4. A method according to any preceding claim, wherein the processor (18) determines if a shut-down is required by comparing the sensor (9 or 10 or 11) output with a modelled behaviour.

5. A method according to any preceding claim, wherein the well comprises a plurality of sensors (9 or 10 or 11), and the processor (18) receives and processes output signals from each of said plurality of sensors.

6. A method according to any preceding claim, wherein the processor (18) is located within a subsea electronics module (7) at the well head.

7. A method according to any preceding claim, wherein the valve (2 or 3 or 4) comprises a directional control valve.

8. A system for controlling production shut down of an underwater fluid production well, the well having a sensor (9 or 10 or 11) for producing an output signal indicative of the state of the well and a valve (2 or 3 or 4) which is actuable to shut down production activity of the well, the system comprising:
means for receiving the output signal; and
a processor (18) for processing the received signal to determine if a shut-down is required and outputting a shut down signal to the valve (2 or 3 or 4);
wherein the receiving means and processor are located at a well head of the underwater fluid production well;
**characterised in that** the system further comprises means, located at the well head, for receiving a control signal (19) from a surface location and logically combining this with the processor output, such that a shut down signal may be received at the valve (2 or 3 or 4) from either the processor or from the surface location.

9. A system according to claim 8, wherein the processor (18) is SIL-rateable.

10. A system according to claim 8 or 9, wherein the processor (18) determines if a shut-down is required by comparing the sensor (9 or 10 or 11) output with a predetermined limit (13).

11. A system according to any of claims 8 to 10, wherein the processor (18) determines if a shut-down is required by comparing the sensor (9 or 10 or 11) output with a modelled behaviour.

12. A system according to any of claims 8 to 11, wherein the well comprises a plurality of sensors (9 or 10 or 11), and the processor (18) receives and processes output signals from each of said plurality of sensors.

13. A system according to any of claims 8 to 12, wherein the processor (18) is located within a subsea electronics module (7) at the well head.

14. A system according to any of claims 8 to 13, wherein the valve (2 or 3 or 4) comprises a directional control valve.

## Patentansprüche

1. Verfahren zur Steuerung einer Produktionsunterbrechung einer Unterwasser-Fluidproduktionsbohrung, umfassend die folgenden Schritte:
a) Überwachen eines Ausgabesignals von einem Sensor (9 oder 10 oder 11), der sich an einem Bohrkopf der Unterwasser-Fluidproduktionsbohrung befindet;
b) Verarbeiten des Signals, um zu bestimmen, ob eine Unterbrechung erforderlich ist; und
c) Durchführen der Unterbrechung durch Senden eines Unterbrechungssignals an eine Vorrichtung, um die Betätigung eines Ventils (2 oder 3 oder 4) zu veranlassen, das sich am Bohrkopf befindet, wobei die Betätigung veranlasst, dass die Bohrung die Produktion unterbricht;
wobei in Schritt b) die Verarbeitung durch einen Prozessor (18) durchgeführt wird, der sich am Bohrkopf befindet, **dadurch gekennzeichnet, dass** das Verfahren weiter den Schritt des Empfangens, am Bohrkopf, eines Steuersignals (19) von einer Oberflächenposition und des logischen Kombinierens desselben mit der Prozessorausgabe umfasst, so dass ein Unterbrechungssignal am Ventil (2 oder 3 oder 4) entweder vom Prozessor oder von der Oberflächenposition empfangen werden kann.

2. Verfahren nach Anspruch 1, wobei der Prozessor (18) SIL-bewertbar ist.

3. Verfahren nach einem der vorstehenden Ansprüche, wobei der Prozessor (18) bestimmt, ob eine Unterbrechung erforderlich ist, indem die Ausgabe des Sensors (9 oder 10 oder 11) mit einem vorbestimmten Grenzwert (13) verglichen wird.

4. Verfahren nach einem der vorstehenden Ansprüche, wobei der Prozessor (18) bestimmt, ob eine Unterbrechung erforderlich ist, indem die Ausgabe des Sensors (9 oder 10 oder 11) mit einem Modellverhalten verglichen wird.

5. Verfahren nach einem der vorstehenden Ansprüche, wobei die Bohrung eine Vielzahl von Sensoren (9 oder 10 oder 11) umfasst und der Prozessor (18) Ausgabesignale von jedem der Vielzahl von Sensoren empfängt und verarbeitet.

6. Verfahren nach einem der vorstehenden Ansprüche, wobei sich der Prozessor (18) innerhalb eines unterseeischen Elektronikmoduls (7) am Bohrkopf befindet.

7. Verfahren nach einem der vorstehenden Ansprüche, wobei das Ventil (2 oder 3 oder 4) ein Richtungssteuerventil umfasst.

8. System zur Steuerung einer Produktionsunterbrechung einer Unterwasser-Fluidproduktionsbohrung, wobei die Bohrung einen Sensor (9 oder 10 oder 11) zur Erzeugung eines Ausgabesignals aufweist, das den Zustand der Bohrung anzeigt, und ein Ventil (2 oder 3 oder 4), das betätigt werden kann, um die Produktionsaktivität der Bohrung zu unterbrechen, wobei das System Folgendes umfasst:
Mittel, um das Ausgangssignal zu empfangen; und
einen Prozessor (18), um das empfangene Signal zu verarbeiten, um zu bestimmen, ob eine Unterbrechung erforderlich ist, und ein Unterbrechungssignal an das Ventil (2 oder 3 oder 4) auszugeben;
wobei sich das Empfangsmittel und der Prozessor an einem Bohrkopf der Unterwasser-Fluidproduktionsbohrung befinden;
**dadurch gekennzeichnet, dass** das System weiter Mittel umfasst, die sich am Bohrkopf befinden, um ein Steuersignal (19) von einer Oberflächenposition zu empfangen und dasselbe logisch mit der Prozessorausgabe zu kombinieren, so dass ein Unterbrechungssignal am Ventil (2 oder 3 oder 4) entweder vom Prozessor oder von der Oberflächenposition empfangen werden kann.

9. System nach Anspruch 8, wobei der Prozessor (18) SIL-bewertbar ist.

10. System nach Anspruch 8 oder 9, wobei der Prozessor (18) bestimmt, ob eine Unterbrechung erforderlich ist, indem die Ausgabe des Sensors (9 oder 10 oder 11) mit einem vorbestimmten Grenzwert (13) verglichen wird.

11. System nach einem der Ansprüche 8 bis 10, wobei der Prozessor (18) bestimmt, ob eine Unterbrechung erforderlich ist, indem die Ausgabe des Sensors (9 oder 10 oder 11) mit einem Modellverhalten verglichen wird.

12. System nach einem der Ansprüche 8 bis 11, wobei die Bohrung eine Vielzahl von Sensoren (9 oder 10 oder 11) umfasst und der Prozessor (18) Ausgabesignale von jedem der Vielzahl von Sensoren empfängt und verarbeitet.

13. System nach einem der Ansprüche 8 bis 12, wobei sich der Prozessor (18) innerhalb eines unterseeischen Elektronikmoduls (7) am Bohrkopf befindet.

14. System nach einem der Ansprüche 8 bis 13, wobei das Ventil (2 oder 3 oder 4) ein Richtungssteuerventil umfasst.

## Revendications

1. Procédé de commande d'arrêt de production d'un puits de production de fluide sous-marin, comprenant les étapes de :
a) surveillance d'un signal de sortie provenant d'un capteur (9 ou 10 ou 11) situé au niveau d'une tête de puits du puits de production de fluide sous-marin ;
b) traitement du signal pour déterminer si un arrêt est nécessaire ; et
c) exécution de l'arrêt en envoyant un signal d'arrêt à un dispositif pour conduire à l'actionnement d'une vanne (2 ou 3 ou 4) située au niveau de la tête de puits, ledit actionnement conduisant le puits à arrêter la production ;
dans lequel à l'étape b), le traitement est effectué par un processeur (18) situé au niveau de la tête de puits, **caractérisé en ce que** le procédé comprend en outre l'étape de réception, au niveau de la tête de puits, d'un signal de commande (19) provenant d'un emplacement en surface et de combinaison logique de celui-ci à la sortie du processeur, de telle sorte qu'un signal d'arrêt peut être reçu au niveau de la vanne (2 ou 3 ou 4) depuis le processeur ou bien depuis l'emplacement en surface.

2. Procédé selon la revendication 1, dans lequel le processeur (18) répond à un niveau d'intégrité de sécurité (SIL).

3. Procédé selon l'une quelconque des revendications précédentes, dans lequel le processeur (18) détermine si un arrêt est nécessaire en comparant la sortie du capteur (9 ou 10 ou 11) avec une limite prédéterminée (13).

4. Procédé selon l'une quelconque des revendications précédentes, dans lequel le processeur (18) détermine si un arrêt est nécessaire en comparant la sortie du capteur (9 ou 10 ou 11) avec un comportement modèle.

5. Procédé selon l'une quelconque des revendications précédentes, dans lequel le puits comprend une pluralité de capteurs (9 ou 10 ou 11), et le processeur (18) reçoit et traite des signaux de sortie provenant de chacun de ladite pluralité de capteurs.

6. Procédé selon l'une quelconque des revendications précédentes, dans lequel le processeur (18) est situé à l'intérieur d'un module électronique sous-marin (7) au niveau de la tête de puits.

7. Procédé selon l'une quelconque des revendications précédentes, dans lequel la vanne (2 ou 3 ou 4) comprend une vanne de commande directionnelle.

8. Système de commande d'arrêt de production d'un puits de production de fluide sous-marin, le puits ayant un capteur (9 ou 10 ou 11) pour produire un signal de sortie indicateur de l'état du puits et une vanne (2 ou 3 ou 4) qui est actionnable pour arrêter l'activité de production du puits, le système comprenant :
des moyens pour recevoir le signal de sortie ; et
un processeur (18) pour traiter le signal reçu pour déterminer si un arrêt est nécessaire et transmettre un signal d'arrêt à la vanne (2 ou 3 ou 4) ;
dans lequel les moyens de réception et le processeur sont situés au niveau d'une tête de puits du puits de production de fluide sous-marin ;
**caractérisé en ce que** le système comprend en outre des moyens, situés au niveau de la tête de puits, de réception d'un signal de commande (19) provenant d'un emplacement en surface et de combinaison logique à la sortie du processeur, de telle sorte qu'un signal d'arrêt peut être reçu au niveau de la vanne (2 ou 3 ou 4) depuis le processeur ou bien depuis l'emplacement en surface.

9. Système selon la revendication 8, dans lequel le processeur (18) répond à un niveau d'intégrité de sécurité (SIL).

10. Système selon la revendication 8 ou 9, dans lequel le processeur (18) détermine si un arrêt est nécessaire en comparant la sortie du capteur (9 ou 10 ou 11) avec une limite prédéterminée (13).

11. Système selon l'une quelconque des revendications 8 à 10, dans lequel le processeur (18) détermine si un arrêt est nécessaire en comparant la sortie du capteur (9 ou 10 ou 11) avec un comportement modèle.

12. Système selon l'une quelconque des revendications 8 à 11, dans lequel le puits comprend une pluralité de capteurs (9 ou 10 ou 11), et le processeur (18) reçoit et traite des signaux de sortie provenant de chacun de ladite pluralité de capteurs.

13. Système selon l'une quelconque des revendications 8 à 12, dans lequel le processeur (18) est situé à l'intérieur d'un module électronique sous-marin (7) au niveau de la tête de puits.

14. Système selon l'une quelconque des revendications 8 à 13, dans lequel la vanne (2 ou 3 ou 4) comprend une vanne de commande directionnelle.
